# EUROPEAN PATENT APPLICATION

(11) **EP 2 939 532 A1**
(43) Date of publication of application: **04.11.2015**
(21) Application number: 15001181.5
(22) Date of filing: 15.04.2015
(51) Int. Cl.: A01J 5/007, A01J 5/04

(54) **METHOD IMPLEMENTED BY A COMPUTER FOR THE CONTROL OF MILKING OPERATIONS ON AUTOMATED SYSTEMS**

(30) Priority: 17.04.2014 IT MI20140719
(71) Applicant: MILKLINE S.r.l., 29027 Podenzano (PC) (IT)
(72) Inventor: Cattaneo, Marco, 29027 Podenzano (PC) (IT); Marchesi, Gabriele, 29027 Podenzano (PC) (IT)
(74) Representative: Lecce, Giovanni

(57) **Abstract**

A method implemented by a computer for the control of the milking operations of automated systems comprises the steps of:
- measuring the pressure in the vacuum line of the milking system;
- recording and storing pressure-measurement data as a function of time and construction of a related plot;
- comparison and processing of data acquired and stored with pre-set values and classification of milking events;
- display of milking events and alarm signalling on local or remote operator interfaces;
in which an interaction with vacuum generation and regulation devices of said milking system occurs in response to a command given by the processing and the determination of an operational event in progress on the milking system, said operational event being determined by the comparison and correlation of the continuously measured pressure values of said pressure plot with values measured during pressure fluctuations recorded at moments preceding and following the change of said plot.

## Description

This invention relates to a method implemented by a computer for the control of milking operations on automated systems.

More particularly, this invention relates to a method implemented by a computer and to the related system for the control and management of milking operations based on continuous measurements of the pressure on the vacuum line of the related automated milking system.

In the zootechnical field there are known systems for the control and monitoring, even remotely, of highly-automated milking systems. The importance of a remote control of milking operations is due to the fact that the collection of the milk is the critical phase of production, combined with the fact that it also occurs at times in which a direct control by the operator or user is not possible.

Said control systems primarily use various technical solutions described below.

Several technical solutions involve the use of control and interface devices arranged in correspondence to milking stations, suitable to collect data from various measurement sensors positioned on the milking station itself and to transmit it to the milking parlour and herd management system.

Said devices collect data related to an individual animal, such as production and milk flow, times and methods of execution of the individual operations of the milking station, temperature and electrical conductivity of the milk.

Other solutions used for the control of milking parlours provide for the collection of measurement data referring to the entire system in relation to specific general aspects or states of the system, such as, for example:
- monitoring the level of the working vacuum for sending an alarm when predetermined threshold values are reached, in order to avoid levels damaging for the animals;
- control of the functioning of the vacuum regulation system and determination of abnormal operating conditions;
- control of the automatic system for washing the milk pipes of the system by measuring the temperature of the wash solutions, the dosing of detergents and disinfectants, etc.

An embodiment example can be found in patent application US 2013/0125821 A1, which describes a method for monitoring a milking process, on a related milking system, wherein said process allows determining the current phase of the process as a function the measurement of values that are then compared and processed by a central unit. In addition to the control of the active milking step, said method also allows control of the inactive steps in which the system is neither operating nor deactivated, and the washing step of the system itself. Said method is implemented via a milking system provided, in the main embodiment, with a pressure sensor inserted in the vacuum line and a regulation valve, both able to send signals to a processor that compares them with an appropriate evaluation criterion and processes them in order to establish a system status signal in output. Said status, or step, of the system can be indicated by means of a visual, acoustic or software signal and transmitted, by any suitable means, to another device to be processed or stored, even in a remote location, also allowing remote control by the operator or user.

However, said milking system control and monitoring of systems have drawbacks and operating limitations.

A drawback of the cited milking system control systems is that they are not able to determine the type of event taking place on the line and, therefore, are not able to report anomalous situations of malfunctions in detail (event type).

Another drawback of the cited control systems for milking systems installations that use measurement devices positioned at the milking station is that they require significant financial investments because each individual milking station must be equipped with devices for measuring, recording and processing the data collected.

Another drawback of known milking system control systems, due to solutions that provide for the collection of measurement data referring to the entire system, is that they only provide information about the status of the system and not about the productivity or efficiency of operations.

Another drawback of known milking system control systems is due to the fact that they do not allow the operator to remotely control the productivity and efficiency of all systems related to one or more milking parlours, even at times when the operator is not present. The purpose of this invention is to overcome the drawbacks listed above.

More particularly, the purpose of this invention is to provide a method implemented by a computer for the control of the milking operations of automated systems able to determine the type of event in progress and provide feedback in order to avoid the occurrence of abnormal conditions, malfunctions or stoppages of the milk production line.

A further purpose of this invention is to provide a method implemented by a computer for the control of the milking operations of automated systems that is simple and requires a limited number of devices, in such a way as to be easily integrated into existing systems.

Another purpose of this invention is to provide a method implemented by a computer for the control of the milking operations of automated systems able to provide information on the productivity and efficiency of the entire system related to one or more milking parlours.

Another purpose of this invention is to provide a method implemented by a computer for the control of milking operations that allows a remote control of the systems of one or more milking parlours, even at times when the physical presence of the operator is not possible.

These are other purposes are achieved by the method implemented by a computer for the control of the milking operations of automated systems according to the independent claims.

The functional characteristics of the method implemented by a computer for the control of the milking operations of automated systems, according to this invention, can be better understood from the detailed description that follows, with reference to the accompanying drawings that illustrate a preferred, and non-limiting, embodiment, in which:
Figure 1 is a schematic representation of the flow chart of the method implemented by a computer for the control of the milking operations of automated systems of the invention;
Figure 2 is a schematic representation of an embodiment of the milking system according to the method of the invention.

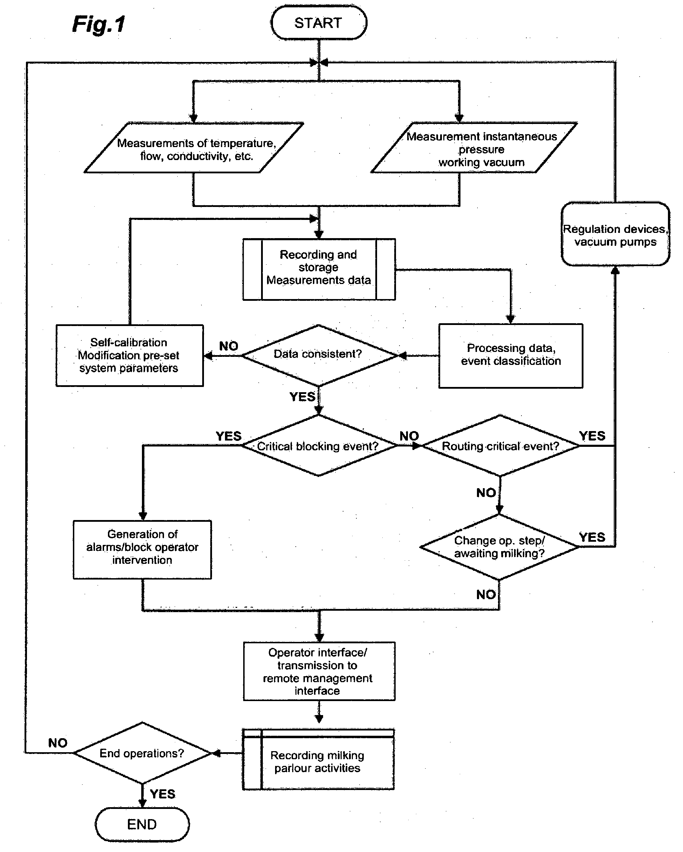

With particular reference to the flow chart of Figure 1, the method implemented by a computer for the control of the milking operations of automated systems of this invention involves the implementation of the following steps:
- continuous measurement of the pressure in the vacuum line of the milking system;
- possible measurement of the electrical conductivity and temperature of the cleaning solution for washing the pipes of the milking system;
- possible measurement of the flow rate of the output conduit of the milk and its temperature in the refrigeration tank;
- recording and storing pressure-measurement data as a function of time and construction of a related plot;
- possible recording and storage of data related to the measurements of electrical conductivity and temperature of the cleaning solution and the flow rate and temperature of the milk;
- comparison and processing of the acquired data and the pre-set values, correlation of the values of the pressure fluctuations recorded in the moments immediately preceding or following the variation to be analysed and classification of the event in progress;
- check the consistency of the data processed and possible calibration and modification of parameters related to the system if the test is negative;
- determination of ordinary or expected operational events (linked to the operator's routine work), classification and transmission of information related to said events, and transmission of information to the operator and management interfaces for the evaluation of the efficiency of the milking process.
- determination of critical events and feedback on vacuum generation and regulation devices, generation of alarms and transmission of information to the operator and management interfaces if the event is blocking or requires operator intervention;
- determination of an awaiting milking event and feedback on vacuum generation and regulation devices for the maintenance and transmission of information to the operator and management interfaces about the operating status of the system.

The method of this invention, implemented by a processor or computer, is based on the continuous, or instantaneous, measurement of pressure (depression) values in the vacuum line, made by pressure sensors with high resolution and high sampling frequency. Said measurement perceives each micro-variation of the pressure over time (instantaneous pressure values) and, in particular, the intensity and duration of fluctuations produced in the moments immediately preceding and following pressure variations in progress. Variations of the pressure plot over time are processed and correlated with the pressure fluctuations recorded in the moments immediately before and after the same variations being analysed and traced to certain activities that take place in the system of milking and classified and coded in events.

The algorithm implementing the method of the invention, after determining the type of event in progress, checks its criticality based on pre-set parameters and sends alarm signals to the operator if the event is blocking and requires an intervention or stopping the system, or by sending a feedback command to the vacuum generation and regulation devices so as to return the system to the ideal conditions.

An innovative characteristic of said algorithm is that of classifying, on the basis of a signal from the central/common, general vacuum, of operational events that occur at the level of the individual milking station, such as:
- start and end of milking;
- attachment of the milking unit to the animal and duration of each individual attachment of the unit on an individual milking station;
- accidental or non-routine events;
- falling of the milking unit from the animal;
- incorrect attachment with excessive entry of air in the vacuum line;
- start and end of system washing and evaluation of the effectiveness of said operations;
- system step of awaiting milking.

Another innovative characteristic of the method of the invention is that of identifying and classifying, among the operational events in progress in the system, the step of "awaiting milking" in which the system is in operation, with all the milking units of the station in rest position. The awaiting milking event normally occurs after the start-up of the system, during operations of loading/unloading animals in/from the milking parlour and during operator breaks or shift changes. When said awaiting milking step is detected in progress in the system, the algorithm sends a control signal to the vacuum generation and regulation devices, so as to adjust the vacuum to a minimum depression level. In this way, the vacuum is brought to a minimum maintenance level and the system will be ready to be activated when the milking units starting working again.

The implementation algorithm of the method also allows an automatic, and continually active, calibration of the measurement sensors (pressure, temperature of flow and electrical conductivity sensors) to the characteristics of the system and the characteristic working methods of the operators, allowing the:
- evaluation of the consistency of the information processed with the parameters set and related to the type of system used;
- modification of the parameters in order to adjust the sensitivity and specificity of the algorithm to the operating conditions of the system;
- modification of the parameters to adjust the sensitivity and specificity of the system to the operating methods of the operators.

Therefore, the algorithm of the method provides for a step of reiteration of self-calibration, or facilitated calibration of the sensors, which allows modifying the pre-set configuration parameters by increasing or decreasing the sensitivity of said method as a function of the technical characteristics of the milking system used. In particular, the data related to the pressure plot and its fluctuations, processed and subsequently decoded in events, may have very different amplitudes that depend on the configuration of the milking system and the maintenance conditions of the system on which the system is installed. The pre-set configuration parameters of the milking system can be:
- number of milking stations;
- type of milking parlour;
- number of animals to be milked.

The method of the invention can be expanded in alternative embodiments and includes, in addition the step of measuring the pressure in the vacuum line, other measurements of the milk line.

In particular, there are steps of measuring the temperature and the electrical conductivity of the cleaning solution for washing and measurements of the flow rate in the output conduit of the milk and temperature of the milk refrigeration tank.

These additional measurements are then recorded and processed along with the pressure measurements and classified.

The classification of all events provides data and management information useful for defining the productivity, efficiency and quality of operations related to the entire system and each individual station and allows:
- monitoring the activities performed by the operators in each milking parlour;
- signalling compatibility issues between the size of the system and the manpower load;
- evaluation of the workload of the system and its efficiency of use.

Events are communicated through an operator interface that remotely communicates, also using wireless transmission means, information related to the productivity and efficiency of the system such as:
- start time of the system;
- shutdown time of the system;
- start time of milking;
- frequency of attachments of the milking units;
- number of falls of the milking units;
- cadence of operations related to the attachment of milking units;
- start time of washing;
- characteristics of the individual system washing steps:
- pipe filling times of the washing device;
- duration of the washing steps;
- concentration of detergents in the washing solution;
- temperature of the washing solution in the various steps;
- turbulence of the washing solution inside the pipes;
- speed of the washing solution;
- vacuum level in the different washing steps.

In addition, the operator interface reports in detail any anomalies in the operation or functioning of the system on the basis of values:
- absolute; i.e., exceeding pre-set threshold values for the vacuum level, the amplitude and duration of fluctuations and the oscillations of the pressure plot, duration of the operational milking step and characteristics of the washing steps;
- relative; i.e., deviation of the measurements recorded from average values, milking durations that deviate significantly from the average values recorded, duration of washing steps that deviate significantly from the average values recorded, number of reattachments of the milking units significantly higher than the average values recorded and a significant variation in the conductivity of the washing solution, which indicates a change in the dosing of the detergents.

The anomalies detected may also be classified as:
- critical, i.e., anomalies that risk compromising the proper functioning of the milking system and that generate a "critical" or blocking alarm, which is communicated and highlighted on the operator and management interfaces;
- minor, i.e., anomalies that generate a warning message, without stopping the system, regarding a specific aspect under control by the operator, in order to restore the proper operation of the milking system.

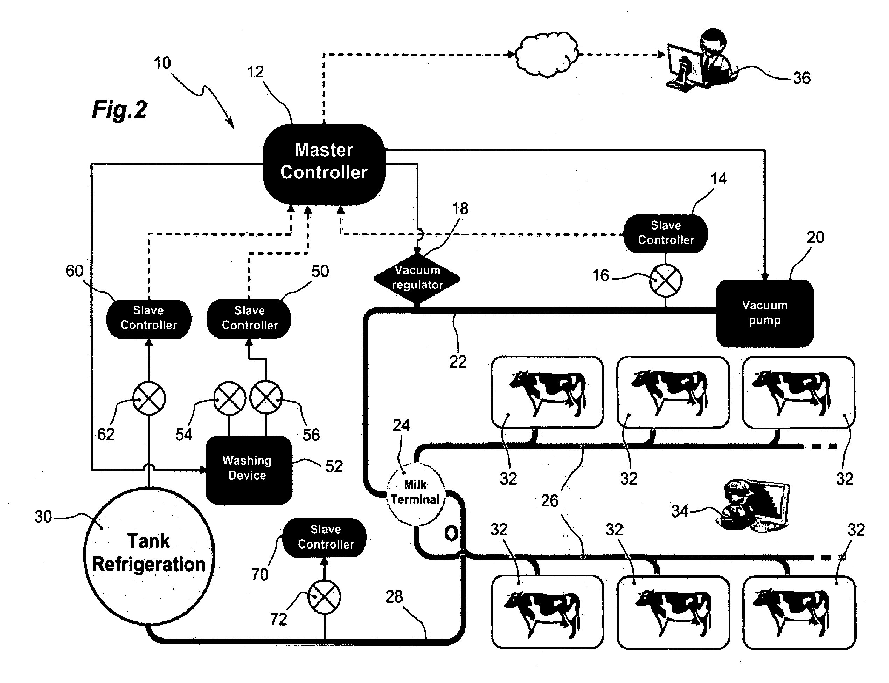

With particular reference to Figure 2, the milking system of the method of the invention indicated as a whole by 10 comprises:
- a main vacuum line 22;
- a pump 20 suitable to generate a depression in said main vacuum line 22;
- a vacuum regulation device 18 placed on said vacuum line 22;
- a milk terminal 24 for collecting the milk coming from the milking units;
- a refrigeration tank 30 for collecting the milk;
- an output conduit 28 connecting said milk terminal 24 to said refrigeration tank 30;
- a multiplicity of milking stations 32 connected to said milk output conduit 28 and said main vacuum line 22 through a line 26;
- a pressure sensor 16 with high resolution and high sampling frequency suitably positioned on the main vacuum line 22;
- a slave controller 14 connected to said pressure sensor 16;
- a master controller 12 connected to said slave controller 14;
- an operator interface 34, and a management interface 36 connected to said master controller 12.

In an alternative embodiment, the milking system 10 further comprises:
- a washing device 52 of the pipes of the milking system;
- a sensor of the electrical conductivity 54 of the cleaning solution connected to said washing device 52;
- a sensor of the temperature 56 of the cleaning solution connected to said washing device 52;
- a further slave controller 50 connected to said sensors 54 and 56 and to the master controller 12;
- a flow sensor 72 connected to the milk output conduit 28;
- a further slave controller 70 connected to said flow sensor 72 and master controller 12;
- a temperature sensor 62 connected to said refrigeration tank 30;
- a further slave controller 60 connected to said temperature sensor 62 and master controller 12.

From the description of the steps and the milking system 10 of the method implemented by a computer for the control of the milking operations of automated systems, object of the invention, its functioning, as described below, can be inferred.

With primary reference to the diagram of the system of Figure 2 and to the flow chart of Figure 1, the milking system 10 is provided with a multiplicity of milking stations 32 that are connected, through milking units not illustrated, to the vessel receiving milk, called a milk terminal 24, through the line 26. A pump 20 creates a depression in the main vacuum line 22 and generates the milking vacuum in the units of the stations 32, making the milk flow from the line 26 to the milk terminal 24. Subsequently, the milk is conveyed from the milk terminal 24 to the refrigeration tank 30 through the milk output conduit 28. The milking vacuum in the main vacuum pipe 22 is regulated and kept constant by the regulator 18, while the pressure sensor 16 constantly and continuously measures the pressure inside the pipe 22 itself.

The high sampling frequency and high resolution of the pressure measurements are collected and stored by the slave controller 14 in the vicinity of the sensor and transmitted to the master controller 12. The pressure sensor 16 also measures micro-variations in the main vacuum pipe due to the operations carried out on any of the milking stations 32.

The data recorded is stored in the master controller 12 which processes it and compares it with the pre-set parameters, automatically calibrating the sensitivity of the algorithm as a function of the type of system. The master controller 12 processes the data received from the slave controller 14 and determines the event in progress on the milking line 10. If this event does not ensure adequate milking conditions for the health of the animals, the master controller 12 acts on the vacuum level by commanding the starting or stopping of the pump 20 and the activation of the vacuum regulator 18. In the case of a critical event, such as an anomaly, a routine error of the system 10 or the fall of a milking unit, the master controller 12 detects the event and acts on the regulation devices to increase or decrease the level of vacuum, generating, where required, an alarm signal to the operator interface 34 and the management interface 36.

In the case in which the system is active but with no milking station 32 operating, the master controller 12 is able to detect the awaiting milking step with respect to the other operational steps and sends a command to the pump 20 and the regulator 18 to lower the vacuum level in the main vacuum pipe 22, commanding, if necessary, the stop the pump 20 itself to save energy. In this awaiting milking step, the master controller acts on the pump 20 and the regulator 18 so as to ensure the system a vacuum level sufficient to provide the system 10 a maintenance level for keeping active the devices actuated by the vacuum without consuming energy. When one of the milking units 32 comes into operation, the master controller 12 determines the start milking event from the pressure data and sends a command to activate the pump 20 to bring the milking system 10 to working vacuum levels.

Again with reference to Figure 2, in alternative embodiments, the master controller 12 may receive information, through additional slave controllers 50, 60 and 70, respectively from sensors of temperature 56 and electrical conductivity 54 of the washing device 52, from the temperature sensor 62 of the refrigeration tank 30 and from the flow sensor 72 of the milk output pipe 28.

The data received from the flow sensor 72 of the milk output conduit 28, and processed by the master controller 12, allows synchronizing the events of attachment of the milking units with the conveying of the milk into the refrigeration tank 30 and evaluating the productivity of milking operations.

The data received from the temperature sensor 62 of the refrigeration tank 30, and processed by the master controller 12, is used to check the anticipated times for lowering the temperature of the milk.

While the data received by the sensors of thermal conductivity 54 and temperature 56 of the washing device 52, and processed by the master controller 12, allows checking the correspondence of the concentrations of detergents and disinfectants and the washing specifications of the milking system 10.

It is also possible to install additional pressure sensors 16, with high measurement frequency and high resolution, suitably arranged on one or more main vacuum 22 or milk pipes, in order to further increase the level of detail and encoding of events. The insertion of additional pressure sensors 16, related to one of the sides of the milking parlour, allows determining with precision the position of the parlour where the recorded events are occurring. Moreover, further pressure sensors 16 arranged on the washing device or on the milk line, allow the master controller 12 to process and assess the optimal degree of turbulence and speed of the washing solutions.

As can be seen from the foregoing, the advantages of the method implemented by a computer for the control of the milking operations of automated systems achieved by this invention are evident.

This discovery is particularly advantageous in that it provides the operator or user a method implemented by a computer for the control of the milking operations of automated systems able to determine the type of event in progress and provide feedback to the vacuum generation and regulation devices in order to avoid the occurrence of abnormal conditions, malfunctions or stoppages of the milk production line.

A further advantage consists in the fact that the method implemented by a computer for the control of milking operations is simple and its implementation on a milking system 10 requires a limited number of devices, so as to be easily integrated even on already existing milking systems.

Another advantage comes from the fact that this invention provides the operator or user a method implemented by a computer for the control of the milking operations of automated systems able to provide complete management control of the productivity and efficiency of the entire system related to one or more milking parlours.

Yet another advantage comes from the fact that this invention provides the operator or user a method implemented by a computer for the control of milking operations that allows a remote control of the systems of one or more milking parlours, even at times when the physical presence of the operator is not possible.

Although the invention has been described with particular reference to a preferred embodiment, provided only by way of non-limiting example, many modifications and variations will be apparent to a person skilled in the art in light of the above description. Therefore, this invention intends to embrace all the modifications and variants falling within the spirit and scope of the following claims.

## Claims

1. A method implemented by a computer for the control of the milking operations of automated systems comprises the steps of:
- measuring the pressure in the vacuum line of the milking system;
- recording and storing pressure-measurement data as a function of time and construction of a related plot;
- comparison and processing of data acquired and stored with pre-set values and classification of milking events;
- display of milking events and alarm signalling on local or remote operator interfaces;
**characterized in that** an interaction with vacuum generation and regulation devices of said milking system occurs in response to a command given by the processing and the determination of an operational event in progress on the milking system, said operational event being determined by the comparison and correlation of the continuously measured pressure values of said pressure plot with values measured during pressure fluctuations recorded at moments preceding and following the change of said plot.

2. The method according to claim 1, **characterized in that** the comparison and processing of variations of said pressure plot determine an awaiting milking step in which the milking system is functional but not operational.

3. The method according to claim 2, **characterized in that** the step of comparison and processing of the acquired data with pre-set values involves a step is of reiteration for the modification of the pre-set parameters in order to adjust the sensitivity and specificity of said method to the type of system and the characteristic working methods of the operator.

4. The method according to claim 1, **characterized in that** the further measurement steps and further steps of recording and sampling are carried out on the milking system and subsequently compared and processed.

5. The method according to claim 4, **characterized in that** further measurements are made of the flow in the milk line.

6. The method according to claim 5, **characterized in that** at least one measurement is made of the temperature of the collected milk.

7. The method according to claim 4, **characterized in that** at least one measurement is made of the electrical conductivity of the washing cleaning solution.

8. The method according to claim 4, **characterized in that** at least one measurement is made of the temperature of the washing cleaning solution.

9. The method according to claim 4, **characterized in that** at least one measurement is made of the electrical conductivity of the washing solution.

10. The method according to claim 4, **characterized in that** there are further steps of measuring the pressure in the milk line and the washing system.

11. An algorithm or computer program comprising portions of code that, when executed by said computer, are suitable to implement a method according to any of the preceding claims.

12. Computer-readable media containing portions of code that, when executed by said computer, allow implementing all the steps of the method according to any of claims 1 to 11.

13. An automated milking system comprising:
- at least a main vacuum pipe (22) with a pump (20) and a regulator (18) placed on the vacuum pipe (22) itself;
- at least one milk output conduit 28 connecting a milk terminal (24) to a refrigeration tank (30) for the collection of the milk;
- a multiplicity of milking stations (32) connected to said milk output pipe (28) and said main vacuum pipe (22) through a line (26);
- at least one pressure sensor (16) arranged on the main vacuum pipe (22);
- a washing device (52) of the pipes;
**characterized in that** an activation of said pump (20) and said regulator (18) occurs in response to a command determined and sent by a master controller (12) suitable to process and identify an operational event in progress on said milking system (10).

14. The milking system (10) according to claim 13, **characterized in that** said operational event, processed and identified by said master controller (12), is determined from the comparison and correlation of the pressure values measured with high frequency and high resolution by said pressure sensor (16) during a variation of said pressure plot with values measured during pressure fluctuations recorded in the moments immediately preceding and following the variation of said plot itself.

15. The milking system (10) according to claim 14, **characterized in that** said information relating to an event is sent from said master controller (12) to the management interface (36) and operator interface (34) by wireless transmission means.

16. The milking system (10) according to claim 14, **characterized in that** the processing of said master controller (12) is determines an awaiting milking step in which the milking system is functional but not operational.

17. The milking plant (10) according to claim 14, **characterized in that** the data relating to the pressure measurements made by said sensor (16) are recorded and sampled by a slave controller (14) and sent to said master controller (12).

18. The milking system (10) according to claim 17, **characterized in that** said data recorded and sampled by said slave controller (14) is sent to said master controller (12) by wireless transmission means.

19. The milking system (10) according to claim 14, **characterized in that** said master controller (12) performs an automatic calibration of the pre-set parameters in order to adjust the sensitivity and specificity of said algorithm to the type of system and the characteristic working methods of the operator.

20. The milking plant (10) according to claim 14, **characterized in that** additional measurement sensors are arranged on said milking system (10).

21. The milking system (10) according to claim 20, **characterized in that**, on said milk output pipe (28), there are at least one flow sensor (72) communicating with said master controller (12) through a further slave controller (70).

22. The milking system (10) according to claim 13, **characterized in that**, on said refrigeration tank (30) there are at least one temperature sensor (62) communicating with said master controller (12) through a further slave controller (60).

23. The milking system (10) according to claim 13, **characterized in that**, on said washing device (52), there are at least one electrical conductivity sensor (54) and at least one temperature sensor (56) communicating with said master controller (12) through a further slave controller (50).

24. The milking system (10) according to claim 13, **characterized in that**, on the line (26) on said milk output pipe (28), there are further pressure sensors (16) communicating with said master controller (12) through suitable slave controllers.

25. The milking system (10) according to claims 21, 22 and 23, **characterized in that** said further slave controllers (50), (60) and (70) communicate with said master controller (12) by wireless transmission means.
